# EUROPEAN PATENT APPLICATION

(11) **EP 3 188 034 A1**
(43) Date of publication of application: **05.07.2017**
(21) Application number: 14900638.9
(22) Date of filing: 14.11.2014
(51) Int. Cl.: G06F 17/30

(54) **DISPLAY TERMINAL-BASED DATA PROCESSING METHOD**

(30) Priority: 25.08.2014 CN 201410423030
(71) Applicant: ZTE Corporation, Shenzhen, Guangdong 518057 (CN)
(72) Inventor: ZHOU, Hongji, Shenzhen Guangdong 518057 (CN); ZUO, Yangmei, Shenzhen Guangdong 518057 (CN)
(74) Representative: Studio Torta S.p.A.
(86) International application number: PCT/CN2014/091180
(87) International publication number: WO 2016/029561

(57) **Abstract**

Disclosed is a display terminal-based data processing method: when an information acquisition instruction is detected, a screenshot operation is performed on a current display interface (S10); related information is searched on the basis of a captured image to determine the related information of a current captured image (S20); and, the determined related information is displayed (S30). Also disclosed is a display terminal-based data processing system. It is very quick and convenient to search for corresponding related information directly on the basis of a currently displayed image, thus allowing increased efficiency in display terminal information query.

## Description

### TECHNICAL FIELD

The present disclosure relates to the field of data processing, and more particularly to a method and a system for processing data based on a display terminal.

### BACKGROUND

When data (e.g., information such as image and text) is displayed on a typical display terminal, a user cannot perform any corresponding operation, for example, querying information corresponding to the currently displayed image or text, based on a current display interface. Instead, the user may need to perform the query using another terminal or after closing the currently displayed interface when he/she wants to obtain the corresponding information, causing a very cumbersome process.

### SUMMARY

The main object of the present disclosure is to solve the technical problem involved with the cumbersome information querying process of the display terminal.

In order to achieve the above object, the present disclosure provides a data processing method based on a display terminal. The data processing method includes steps of:
generating a screenshot of a display interface when an information acquisition instruction is detected;
searching relevant information based on the screenshot to determine the relevant information of the screenshot; and
displaying the determined relevant information.

In an embodiment, prior to the step of searching relevant information based on the screenshot to determine the relevant information of the screenshot, the data processing method includes steps of:
displaying the screenshot;
determining a screenshot area corresponding to a screenshot instruction detected to be actuated based on the displayed screenshot; and generating another screenshot according to the determined screenshot area.

In an embodiment, subsequent to the step of displaying the screenshot, the data processing method includes a step of:
returning to display the display interface corresponding to the screenshot when a
cancellation instruction is detected to be actuated based on the displayed screenshot.

In an embodiment, prior to the step of generating a screenshot of a display interface when an information acquisition instruction is detected, the data processing method includes steps of:
creating a gesture trajectory in real time or periodically based on information detected by a gesture detection device;
matching a current gesture trajectory with a preset motion trajectory; and actuating the information acquisition instruction when the current gesture trajectory
matches the preset motion trajectory.

In an embodiment, subsequent to the step of displaying the determined relevant information, the data processing method includes steps of:
transmitting a payment request to a server corresponding to the relevant information when a payment instruction is detected to be actuated based on the displayed relevant information, so as to enable the server to transmit a payment interface upon receipt of the payment request;
displaying the payment interface received from the server, and transmitting, upon receipt of payment information input by a user via the payment interface, the payment information to the server, so as to enable the server to perform a payment operation based on the payment information and feedback a corresponding payment result information when the payment operation is completed; and
displaying the payment result information received from the server.

Moreover, in order to achieve the above object, the present disclosure further provides a data processing system based on a display terminal. The data processing system includes:
a screenshot module configured to generate a screenshot of a display interface when an information acquisition instruction is detected;
a search module configured to search relevant information based on the screenshot to determine the relevant information of the screenshot; and
a display module configured to display the determined relevant information.

In an embodiment of the data processing system:
the display module is further configured to display the screenshot;
the data processing system further includes a determination module configured to determine a screenshot area corresponding to a screenshot instruction detected to be actuated based on the displayed screenshot; and
the screenshot module is further configured to generate another screenshot according to the determined screenshot area.

In an embodiment, the display module is further configured to return to display the display interface corresponding to the screenshot when a cancellation instruction is detected to be actuated based on the displayed screenshot.

In an embodiment, the data processing system further includes:
a generation module configured to create a gesture trajectory in real time or periodically based on information detected by a gesture detection device;
a match module configured to match a current gesture trajectory with a preset motion trajectory; and
an instruction actuation module configured to actuate the information acquisition instruction when the current gesture trajectory matches the preset motion trajectory.

In an embodiment, the data processing system further includes:
a transmission module configured to transmit a payment request to a server corresponding to the relevant information when a payment instruction is detected to be actuated based on the displayed relevant information, so as to enable the server to transmit a payment interface upon receipt of the payment request; and to transmit, upon receipt of payment information input by a user via the payment interface, the payment information to the server, so as to enable the server to perform a payment operation based on the payment information and feedback a corresponding payment result information when the payment operation is completed; and
the display module is further configured to display the payment interface and display the payment result information.

According to the data processing method and system based on display terminal proposed by the present disclosure, the terminal performs a screen capture operation on the current display interface when detecting an information acquisition instruction, and performs an image search based on the captured screenshot to determine and display relevant information corresponding to the captured screenshot. It is very fast and convenient to search for the relevant information directly based on the currently displayed interface, achieving a more efficient way for the display terminal to query information.

### BRIEF DESCRIPTION OF THE DRAWINGS

FIG. 1 is a flow chart illustrating a data processing method based on display terminal according to a first embodiment of the present disclosure;
FIG. 2 is a flow chart illustrating a data processing method based on display terminal according to a second embodiment of the present disclosure;
FIG. 3 is a flow chart illustrating a data processing method based on display terminal according to a third embodiment of the present disclosure;
FIG. 4 is a flow chart illustrating a data processing method based on display terminal according to a fourth embodiment of the present disclosure;
FIG. 5 is a block diagram illustrating a data processing system based on display terminal according to a first embodiment of the present disclosure;
FIG. 6 is a block diagram illustrating a data processing system based on display terminal according to a second embodiment of the present disclosure;
FIG. 7 is a block diagram illustrating a data processing system based on display terminal according to a third embodiment of the present disclosure;
FIG. 8 is a block diagram illustrating a data processing system based on display terminal according to a fourth embodiment of the present disclosure.

Implementation of objects, functional feature and advantageous of the present disclosure will be further described with reference to the embodiments below and the drawings.

### DETAILED DESCRIPTION

It is to be understood that the specific embodiments described herein are merely illustrative of the disclosure and are not intended to limit the disclosure.

A data processing method based on display terminal is provided by the disclosure.

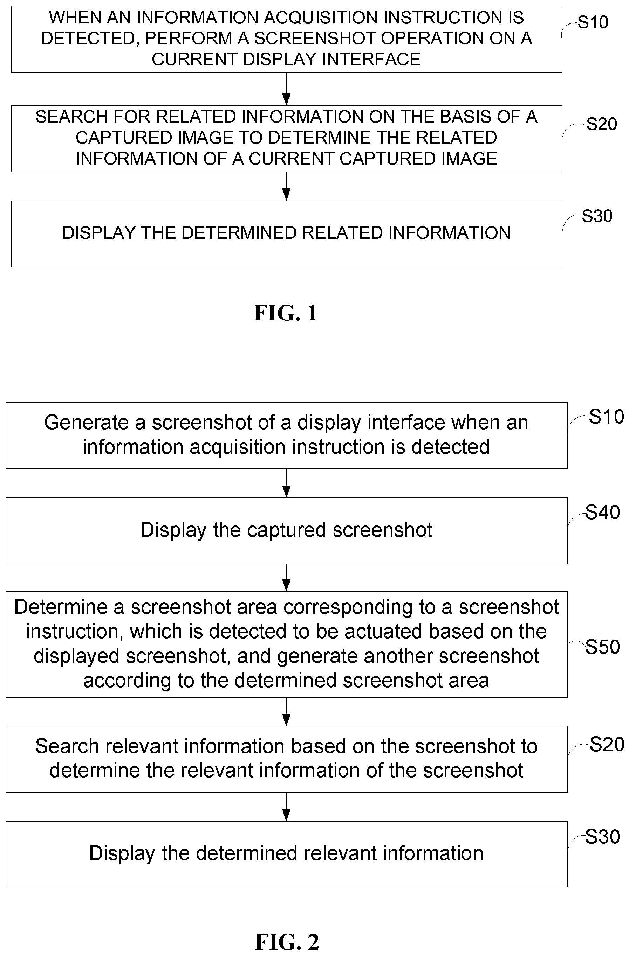

Referring to FIG. 1, which is a flow chart illustrating a data processing method based on display terminal according to a first embodiment of the present disclosure, the data processing method according to the embodiment includes following steps.

In step S10, a screenshot of a display interface is generated when an information acquisition instruction is detected.

In the embodiment, the information acquisition instruction can be actuated by a user based on a control terminal (such as a remote controller and a smartphone), a voice control command, a gesture or the like. When the information acquisition instruction is detected, the terminal may perform a screen capture on the current display interface. A picture of a current frame may be captured when a video is displayed on the current display interface, while the current display interface may be directly captured when text, picture or the like is displayed on the current display interface.

In step S20, relevant information is searched based on the screenshot to determine the relevant information of the screenshot.

In the embodiment, an image search may be performed by the terminal based on the captured screenshot. For example, the image search may be performed directly through a search engine of the terminal, or via a third-party terminal such as a server communicating with the terminal. Moreover, the image search may be performed by an STB (Set Top Box) of the terminal which is a TV set. Alternatively, recognition (e.g., text recognition) may be performed on the captured screenshot so as to search, through a search engine of the terminal or another third-party terminal, for the relevant information corresponding to the screenshot based on the recognized information.

It will be appreciated by those skilled in the art that, in order to improve the search efficiency, it is possible to search only the information of a preset type(s) when performing the image search so as to avoid the need for the user to perform artificial filtering. The preset type(s) can be set based on the user's needs.

In step S30, the determined relevant information is displayed.

When the determined relevant information is displayed on the terminal, it can be displayed with full screen as direct substitution of the current display interface, or displayed within a preset display area, for example, displayed within a small window or a scroll bar. The display manner of the relevant information can be set by the user. It will be understood by those skilled in the art that, in order to improve intelligence of the terminal, the step S30 may include determining a current display manner and displaying the determined relevant information based on the current display manner.

It will be appreciated by those skilled in the art that, in order to improve the intelligence of displaying the relevant information, the terminal may display the relevant information directly in a web page, based on which the user may make further inquiries or other operations. Alternatively, the terminal may generate a corresponding two-dimensional code based on a web address corresponding to relevant information, such that the user can access a corresponding interface by scanning the two-dimensional code via another terminal for further inquiries or other operations.

The relevant information may include specification information, purchase information, advertisement information or the like of an item in the screenshot. Following description will be made by way of a specific example. When an information acquisition instruction is detected during playing of a TV shopping program, the terminal performs a screen capture operation on a currently displayed frame, then searches for relevant information (e.g., purchase information) of an item based on the captured screenshot, and displays the relevant information in the form of a web page, through which the user can access a corresponding purchase interface to purchase the corresponding item. Alternatively, when the user is interested in a currently introduced movie during a TV program, an information acquisition instruction may be actuated; then a screenshot of the currently played frame is captured when the information acquisition instruction is detected, and a search is performed based on the captured screenshot, such that content description of the searched movie, playing schedule of the searched cinemas and the like can be displayed. The above two specific examples are merely illustrative of the above-described embodiments rather than indicative of that the embodiments of the present disclosure are limited only to the two examples. Any modifications or alternatives made by those skilled in the art based on the above-described two examples for searching relevant information based on the captured screenshot may fall within the scope of the present disclosure.

According to the data processing method based on display terminal proposed by the present disclosure, a screen capture operation is performed on the current display interface when an information acquisition instruction is detected, and an image search is performed based on the captured screenshot to determine and display relevant information corresponding to the captured screenshot. It is very fast and convenient to search for the relevant information directly based on the currently displayed interface, achieving a more efficient way for the display terminal to query information.

Furthermore, in order to improve the accuracy of acquisition of the relevant information, referring to FIG. 2, a second embodiment of the data processing method based on display terminal is proposed on the basis of the first embodiment. In the embodiment, the data processing method further includes following steps prior to the step S20.

In step S40, the captured screenshot is displayed.

In step S50, a screenshot area corresponding to a screenshot instruction, which is detected to be actuated based on the displayed screenshot, is determined; and another screenshot is generated according to the determined screenshot area.

In the embodiment, as the current display interface may include a variety of information, for example, when the captured screenshot contains images of multiple items or multiple segments of character information, the search volume may be too large, both the efficiency and accuracy may be low if the search is performed based on the currently captured screenshot. In order to solve the above problem, the user may take a further screen capture operation based on the screenshot so as to capture another screenshot corresponding to an item(s) that the user requires to search for the relevant information.

In the embodiment, the screenshot instruction may be actuated based on gestures or voice, or via a control terminal, and preferably, based on gestures. Accordingly, a following step may be included prior to the step S50: a screenshot instruction is actuated when a gesture trajectory detected with respect to the display interface matches a preset motion trajectory.

Furthermore, in order to improve the accuracy of acquisition of the relevant information, the data processing method further includes a following step subsequent to the step S40.

The display interface corresponding to the screenshot is returned to be displayed when a cancellation instruction is detected to be actuated based on the displayed screenshot.

In the embodiment, when the terminal displays the captured screenshot, the user can observe whether the currently displayed screenshot is clear and correct. If the currently displayed screenshot is unclear or erroneous, a cancellation instruction may be actuated by the user to re-capture the screenshot. The cancellation instruction may be actuated based on gestures, voice or via a control terminal, and preferably, based on gestures.

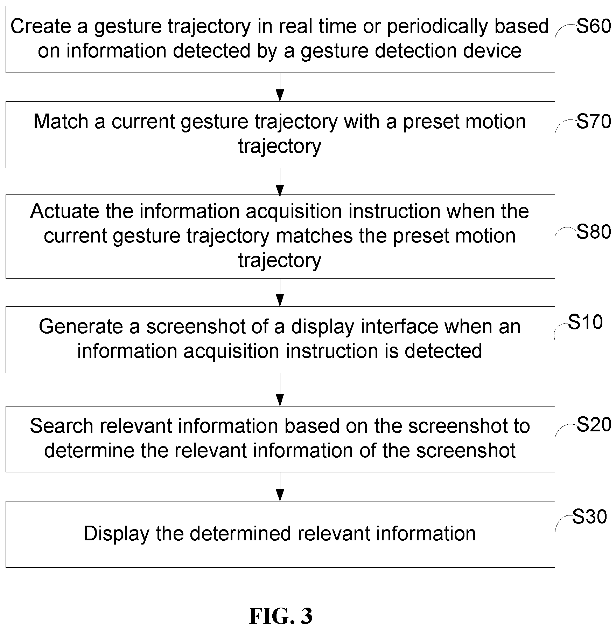

Furthermore, in order to improve intelligence of controlling the terminal, referring to FIG. 3, a third embodiment of the data processing method based on display terminal is proposed on the basis of the first and second embodiments. In the embodiment, the data processing method further includes following steps prior to the step S10.

In step S60, a gesture trajectory is created in real time or periodically based on information detected by a gesture detection device.

In step S70, a current gesture trajectory is matched with a preset motion trajectory.

In step S80, the information acquisition instruction is actuated when the current gesture trajectory matches the preset motion trajectory.

In the embodiment, the gesture detection device may be a camera, an EMG (electromyography) information detection device or the like. When the gesture detection device is a camera, a specific process may be as follows. As image frames corresponding to a user are acquired by the camera, the acquired image frames are subjected to gesture analysis to determine gesture information contained in the image frame, then the image frame containing the gesture information is analyzed with the multi-target tracking method to create the current gesture trajectory, which is to be matched with a motion trajectory in a preset trajectory library. When the current gesture trajectory matches the motion trajectory in the trajectory library, for example, when the preset trajectory is Z-shaped and the gesture trajectory created based on received gestures of the user is also Z-shaped, the information acquisition instruction is actuated. When the gesture detection device is an EMG information detecting device, a corresponding gesture may be determined based on a preset mapping relationship between EMG signals and gestures upon receipt of an EMG signal transmitted from the EMG information detection device, then a corresponding gesture trajectory may be created based on the determined gestures and matched with the preset motion trajectory. When the created gesture trajectory matches the preset motion trajectory, the information acquisition instruction is actuated.

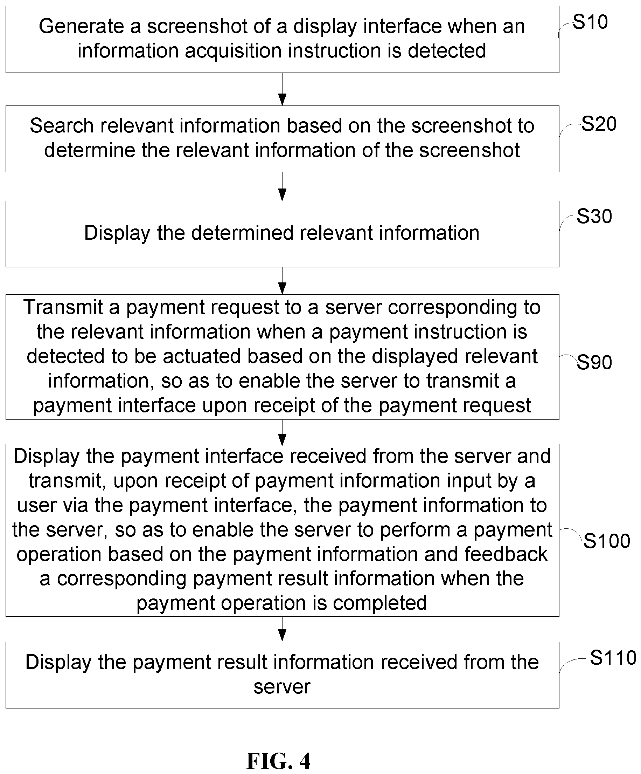

Furthermore, in order to enrich functionality of the terminal, referring to FIG. 4, a fourth embodiment of the data processing method based on display terminal is proposed on the basis of the first to third embodiments. In the embodiment, the data processing method further includes following steps subsequent to the step S30.

In step S90, a payment request is transmitted to a server corresponding to the relevant information when a payment instruction is detected to be actuated based on the displayed relevant information, so as to enable the server to transmit a payment interface upon receipt of the payment request.

In the embodiment, the relevant information is preferably displayed in the form of a web page, such that the user can actuate the payment instruction based on the currently displayed web page. All the relevant information displayed on the terminal may correspond to a same server, but also may correspond to different servers, such as a Jingdong^{™} server, a Taobao^{™} server and the like. In step S100, the payment interface received from the server is displayed, and, upon receipt of payment information input by a user via the payment interface, the payment information is transmitted to the server, so as to enable the server to perform a payment operation based on the payment information and feedback a corresponding payment result information when the payment operation is completed.

Upon receiving the payment request, the server may pushes a corresponding payment interface to the terminal, which may include a plurality of input fields for inputting, for example, payment account, recipient address, commodity quantity and payment manner. In this way, the user may actuate the payment request and selecting/inputting instructions based on gestures or voice, or by controlling the terminal. After receiving the payment information transmitted from the terminal, the server may perform a corresponding payment operation based on the payment information, for example, issue a corresponding payment request to a server corresponding to the payment account, and then may generate corresponding payment result information.

In step S110, the payment result information received from the server is displayed.

The payment result information may include payment conditions indicative of, for example, that the current payment successes or fails, and other information such as delivery time.

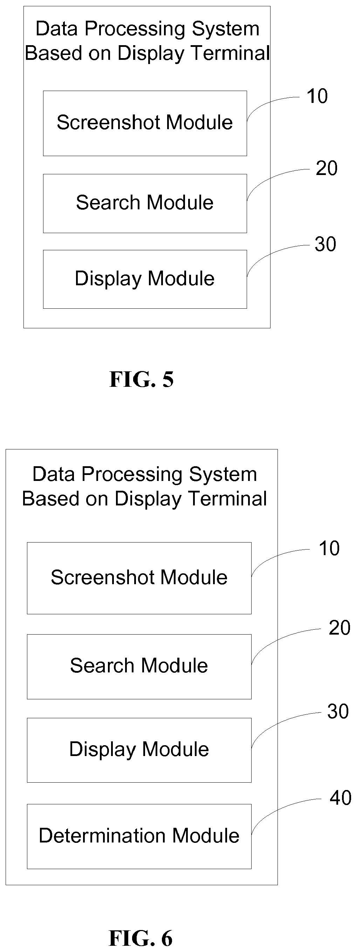

A data processing system based on display terminal is also provided by the disclosure. Following description will be made with reference to FIG. 5, which is a block diagram illustrating a data processing system based on display terminal according to a first embodiment of the present disclosure.

It is to be noted that, for those skilled in the art, the block diagram shown in FIG. 5 is merely an exemplary diagram illustrating a preferred embodiment. Any function modules can be easily added herein by those skilled in the art on the basis of the function modules in the data processing system based on display terminal shown by FIG. 5. The name of each function module is merely a custom name for assisting in understanding the function modules of the data processing system based on display terminal, and is not intended to limit the technical solution of the disclosure. The functions to be achieved by the function modules with custom names are key points of the technical solution according to the disclosure.

The data processing system based on display terminal provided by the embodiment includes following modules.

A screenshot module 10 is configured to generate a screenshot of a display interface is generated when an information acquisition instruction is detected.

In the embodiment, the information acquisition instruction can be actuated by a user based on a control terminal (such as a remote controller and a smartphone), a voice control command, a gesture or the like. When the information acquisition instruction is detected, the screenshot module 10 may perform a screen capture on the current display interface. A picture of a current frame may be captured when a video is displayed on the current display interface, while the current display interface may be directly captured when text, picture or the like is displayed on the current display interface.

A search module 20 is configured to search relevant information based on the screenshot to determine the relevant information of the screenshot.

In the embodiment, the search module 20 may perform an image search based on the captured screenshot. For example, the search module 20 may perform the image search directly through a search engine of the terminal, or via a third-party terminal such as a server communicating with the terminal. Moreover, the image search may be performed by an STB (Set Top Box) of the terminal which is a TV set. Alternatively, recognition (e.g., text recognition) may be performed, by the terminal where the search module 20 resides, on the captured screenshot so as to search, through a search engine of the terminal or another third-party terminal, for the relevant information corresponding to the screenshot based on the recognized information.

It will be appreciated by those skilled in the art that, in order to improve the search efficiency, it is possible to search only the information of a preset type(s) when performing the image search so as to avoid the need for the user to perform artificial filtering. The preset type(s) can be set based on the user's needs.

A display module 30 is configured to display the determined relevant information.

When the determined relevant information is displayed on the terminal, it can be displayed with full screen as direct substitution of the current display interface, or displayed within a preset display area, for example, displayed within a small window or a scroll bar. The display manner of the relevant information can be set by the user. It will be understood by those skilled in the art that, in order to improve intelligence of the terminal, the display module 30 may be further configured to determine a current display manner and display the determined relevant information based on the current display manner.

It will be appreciated by those skilled in the art that, in order to improve the intelligence of displaying the relevant information, the display module 30 may display the relevant information directly in a web page, based on which the user may make further inquiries or other operations. Alternatively, the display module 30 may generate a corresponding two-dimensional code based on a web address corresponding to relevant information, such that the user can access a corresponding interface by scanning the two-dimensional code via another terminal for further inquiries or other operations.

The relevant information may include specification information, purchase information, advertisement information or the like related to an item in the screenshot. Following description will be made by way of a specific example. When an information acquisition instruction is detected during playing of a TV shopping program, the screenshot module 10 performs a screen capture operation on a currently displayed frame, then the search module 20 searches for relevant information (e.g., purchase information) of an item based on the captured screenshot, and the display module 30 displays the relevant information in the form of a web page, through which the user can access a corresponding purchase interface to purchase the corresponding item. Alternatively, when the user is interested in a currently introduced movie during the TV program, an information acquisition instruction may be actuated; then the screenshot module 10 captures a screenshot of the currently played frame when the information acquisition instruction is detected, and the search module 20 performs a search based on the captured screenshot, such that the display module 30 can display content description of the searched movie, playing schedule of the searched cinemas and the like. The above two specific examples are merely illustrative of the above-described embodiments rather than indicative of that the embodiments of the present disclosure are limited only to the two examples. Any modifications or alternatives made by those skilled in the art based on the above-described two examples for searching relevant information based on the captured screenshot may fall within the scope of the present disclosure.

According to the data processing method based on display terminal proposed by the present disclosure, the screenshot module 10 performs a screen capture operation on the current display interface when an information acquisition instruction is detected, and the search module 20 performs an image search based on the captured screenshot to determine relevant information corresponding to the captured screenshot, such that the display module 30 can display the determined relevant information. It is very fast and convenient to search for the relevant information directly based on the currently displayed interface, achieving a more efficient way for the display terminal to query information.

Furthermore, in order to improve the accuracy of acquisition of the relevant information, referring to FIG. 6, a second embodiment of the data processing system based on display terminal is proposed on the basis of the first embodiment. In the embodiment, the data processing system further includes following modules.

The display module 30 is further configured to display the screenshot.

A determination module 40 is configured to determine a screenshot area corresponding to a screenshot instruction, which is detected to be actuated based on the displayed screenshot.

Thus, the screenshot module 10 is further configured to generate another screenshot according to the determined screenshot area.

In the embodiment, as the current display interface may include a variety of information, for example, when the captured screenshot contains images of multiple items or multiple segments of character information, the search volume may be too large, both the efficiency and accuracy may be low if the search is performed based on the currently captured screenshot. In order to solve the above problem, the user may take a further screen capture operation based on the screenshot so as to capture another screenshot corresponding to an item(s) that the user requires to search for the relevant information.

In the embodiment, the screenshot instruction may be actuated based on gestures or voice, or via a control terminal, and preferably, based on gestures. Accordingly, a screenshot instruction may be actuated when a gesture trajectory detected with respect to the display interface matches a preset motion trajectory.

Furthermore, in order to improve the accuracy of acquisition of the relevant information, the display module 30 is further configured to return to display the display interface corresponding to the screenshot when a cancellation instruction is detected to be actuated based on the displayed screenshot.

In the embodiment, when the display module 30 displays the captured screenshot, the user can observe whether the currently displayed screenshot is clear and correct. If the currently displayed screenshot is unclear or erroneous, a cancellation instruction may be actuated by the user to re-capture the screenshot. The cancellation instruction may be actuated based on gestures, voice or via a control terminal, and preferably, based on gestures.

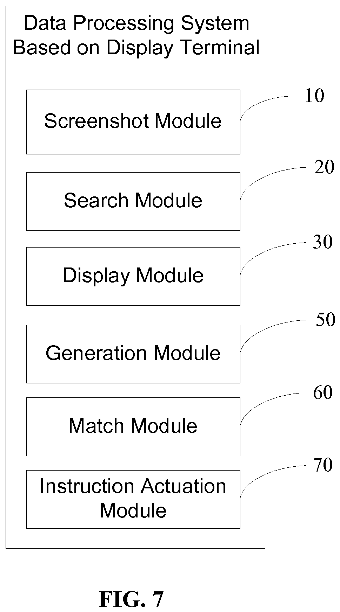

Furthermore, in order to improve intelligence of controlling the terminal, referring to FIG. 7, a third embodiment of the data processing system based on display terminal is proposed on the basis of the first and second embodiments. In the embodiment, the data processing system further includes following modules.

A generation module 50 is configured to create a gesture trajectory in real time or periodically based on information detected by a gesture detection device.

A match module 60 is configured to match a current gesture trajectory with a preset motion trajectory.

An instruction actuation module 70 is configured to actuate the information acquisition instruction when the current gesture trajectory matches the preset motion trajectory.

In the embodiment, the gesture detection device may be a camera, an EMG information detection device or the like. When the gesture detection device is a camera, a specific process may be as follows. As image frames corresponding to a user are acquired by the camera, the acquired image frames are subjected to gesture analysis to determine gesture information contained in the image frame, then the image frame containing the gesture information is analyzed with the multi-target tracking method to create the current gesture trajectory, which is to be matched with a motion trajectory in a preset trajectory library. When the current gesture trajectory matches the motion trajectory in the trajectory library, for example, when the preset trajectory is Z-shaped and the gesture trajectory created based on received gestures of the user is also Z-shaped, the information acquisition instruction is actuated. When the gesture detection device is an EMG information detecting device, a corresponding gesture may be determined based on a preset mapping relationship between EMG signals and gestures upon receipt of an EMG signal transmitted from the EMG information detection device, then a corresponding gesture trajectory may be created based on the determined gestures and matched with the preset motion trajectory. When the created gesture trajectory matches the preset motion trajectory, the information acquisition instruction is actuated.

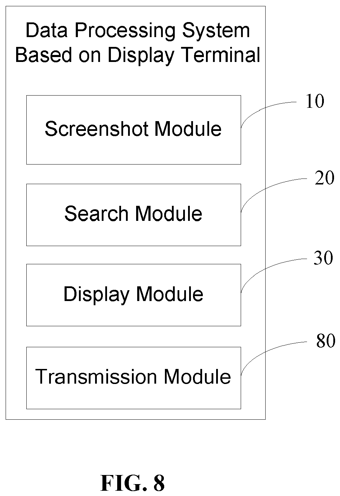

Furthermore, in order to enrich functionality of the terminal, referring to FIG. 8, a fourth embodiment of the data processing system based on display terminal is proposed on the basis of the first to third embodiments. In the embodiment, the data processing system further includes following modules.

A transmission module 80 is configured to transmit a payment request to a server corresponding to the relevant information when a payment instruction is detected to be actuated based on the displayed relevant information, so as to enable the server to transmit a payment interface upon receipt of the payment request; and to transmit, upon receipt of payment information input by a user via the payment interface, the payment information to the server, so as to enable the server to perform a payment operation based on the payment information and feedback a corresponding payment result information when the payment operation is completed.

The display module 30 is further configured to display the payment interface and display the payment result information.

In the embodiment, the relevant information is preferably displayed in the form of a web page, such that the user can actuate the payment instruction based on the currently displayed web page. All the relevant information displayed on the terminal may correspond to a same server, but also may correspond to different servers, such as a Jingdong^{™} server, a Taobao^{™} server and the like. Upon receiving the payment request, the server may pushes a corresponding payment interface to the terminal, which may include a plurality of input fields for inputting, for example, payment account, recipient address, commodity quantity and payment manner. In this way, the user may actuate the payment request and selecting/inputting instructions based on gestures or voice, or via a control terminal. After receiving the payment information transmitted from the terminal, the server may perform a corresponding payment operation based on the payment information, for example, issue a corresponding payment request to a server corresponding to the payment account, and then may generate corresponding payment result information. The payment result information may include payment conditions indicative of, for example, that the current payment successes or fails, and other information such as delivery time.

It is to be noted that, the terms "comprises", "includes" and any other variant thereof used herein are intended to encompass a non-exclusive inclusion, such that the process, method, article or system comprises a series of elements includes not only those elements, but also other elements that are not explicitly listed, or those elements that are inherent to such process, method, article, or system. In the absence of explicit restrictions, an element defined by the statement "includes/comprises a ..." do not exclude the presence of additional elements in the process, method, article or system that includes the element.

The serial numbers used for above-described embodiments of the present disclosure are for the sake of description only and are not representative of priority of the embodiments.

With the description of the above embodiments, it will be apparent to those skilled in the art that the method of above embodiments can be realized by means of software plus necessary general hardware platform, and of course the hardware only, but in many cases the former is a better way of implementation. Based on this understanding, the technical solution of the present disclosure in essence, or its inventive portion compared to prior art, can be embodied in the form of a software product stored in a storage medium (e.g., ROM / RAM, magnetic disk, optical disk) carrying a number of instructions for enabling a terminal device (which may be a mobile phone, a computer, a server, an air conditioner, or a network device, etc.) to perform the method described in various embodiments of the present disclosure.

The above are merely preferred embodiments of the present disclosure and are not intended to limit the scope of protection of the present disclosure. Any modification, equivalent substitution and improvement or the like within the spirit and principle of the present disclosure shall be included in the scope of protection of the present disclosure.

### INDUSTRIAL APPLICABILITY

According to the data processing method and system based on display terminal proposed by the present disclosure, the terminal performs a screen capture operation on the current display interface when detecting an information acquisition instruction, and performs an image search based on the captured screenshot to determine and display relevant information corresponding to the captured screenshot. It is very fast and convenient to search for the relevant information directly based on the currently displayed interface, achieving a more efficient way for the display terminal to query information.

## Claims

1. A data processing method based on a display terminal, **characterized in that** the data processing method comprises steps of:
generating a screenshot of a display interface when an information acquisition instruction is detected;
searching relevant information based on the screenshot to determine the relevant information of the screenshot; and
displaying the determined relevant information.

2. The data processing method according to claim 1, **characterized in that**, prior to the step of searching relevant information based on the screenshot to determine the relevant information of the screenshot, the data processing method comprises steps of:
displaying the screenshot; and
determining a screenshot area corresponding to a screenshot instruction detected to be actuated based on the displayed screenshot; and generating another screenshot according to the determined screenshot area.

3. The data processing method according to claim 2, **characterized in that**, subsequent to the step of displaying the screenshot, the data processing method comprises a step of:
returning to display the display interface corresponding to the screenshot when a cancellation instruction is detected to be actuated based on the displayed screenshot.

4. The data processing method according to claim 1, **characterized in that**, prior to the step of generating a screenshot of a display interface when an information acquisition instruction is detected, the data processing method comprises steps of:
creating a gesture trajectory in real time or periodically based on information detected by a gesture detection device;
matching a current gesture trajectory with a preset motion trajectory; and
actuating the information acquisition instruction when the current gesture trajectory matches the preset motion trajectory.

5. The data processing method according to any one of claims 1-4, **characterized in that**, subsequent to the step of displaying the determined relevant information, the data processing method comprises steps of:
transmitting a payment request to a server corresponding to the relevant information when a payment instruction is detected to be actuated based on the displayed relevant information, so as to enable the server to transmit a payment interface upon receipt of the payment request;
displaying the payment interface received from the server, and transmitting, upon receipt of payment information input by a user via the payment interface, the payment information to the server, so as to enable the server to perform a payment operation based on the payment information and feedback a corresponding payment result information when the payment operation is completed; and
displaying the payment result information received from the server.

6. A data processing system based on a display terminal, **characterized in that** the data processing system comprises:
a screenshot module configured to generate a screenshot of a display interface when an information acquisition instruction is detected;
a search module configured to search relevant information based on the screenshot to determine the relevant information of the screenshot; and
a display module configured to display the determined relevant information.

7. The data processing system according to claim 6, **characterized in that**, the data processing system comprises:
the display module is further configured to display the screenshot;
a determination module configured to determine a screenshot area corresponding to a screenshot instruction detected to be actuated based on the displayed screenshot; and
the screenshot module is further configured to generate another screenshot according to the determined screenshot area.

8. The data processing system according to claim 7, **characterized in that**, the display module is further configured to return to display the display interface corresponding to the screenshot when a cancellation instruction is detected to be actuated based on the displayed screenshot.

9. The data processing system according to claim 6, **characterized in that**, the data processing system comprises:
a generation module configured to create a gesture trajectory in real time or periodically based on information detected by a gesture detection device;
a match module configured to match a current gesture trajectory with a preset motion trajectory; and
an instruction actuation module configured to actuate the information acquisition instruction when the current gesture trajectory matches the preset motion trajectory.

10. The data processing system according to any one of claims 6-9, **characterized in that**, the data processing system comprises:
a transmission module configured to transmit a payment request to a server corresponding to the relevant information when a payment instruction is detected to be actuated based on the displayed relevant information, so as to enable the server to transmit a payment interface upon receipt of the payment request; and to transmit, upon receipt of payment information input by a user via the payment interface, the payment information to the server, so as to enable the server to perform a payment operation based on the payment information and feedback a corresponding payment result information when the payment operation is completed; and
the display module is further configured to display the payment interface and display the payment result information.
